# EUROPEAN PATENT SPECIFICATION

(11) **EP 1 626 300 B1**
(45) Date of publication and mention of the grant of the patent: **23.01.2008**
(21) Application number: 05106900.3
(22) Date of filing: 27.07.2005
(51) Int. Cl.: G02B 6/44

(54) **Housing for optical network interface device**
Gehäuse für optische Netzwerkschnittstelleneinrichtung
Boîtier pour un dispositif d'interface de réseau optique

(30) Priority: 12.08.2004 NL 1026832
(43) Date of publication of application: 15.02.2006
(73) Proprietor: Genexis B.V., 6105 BP Maria Hoop (NL); Bti Bremi teletronica industrie B.V., 5521 dj Eersel (NL)
(72) Inventor: van den Hoven, Gerard Nicolaas, NL-6105 BP, Maria Hoop (NL); Crijns, Johannes Jacobus Jozephus, NL-5212 XE, 's-Hertogenbosch (NL); van de Ven, Jacques Henricus Wilhelmus Maria, NL-5525 AG, Duizel (NL); Couvert, Hendricus Gerrit Pieter, NL-5672 TP, Nuenen (NL)
(74) Representative: Smeets, Eugenius Theodorus J. M.

(56) References cited:
- EP-A- 1 322 133
- WO-A-01/41263
- US-A- 5 668 911
- US-A- 5 828 807
- US-A- 6 058 235
- US-A1- 2004 067 036
- US-B1- 6 344 911

## Description

The invention relates to a device for connecting appliances to optical waveguide fibers, in which device signals received from optical waveguide fibers are converted into signals suitable for the relevant appliances by means of user modules. The plural form "appliances" denotes both that a plurality of appliances can be connected simultaneously and that appliances of different kinds can be connected, such that it is possible in the latter case that one or several such appliances can be simultaneously connected.

Such a device forms an end station or termination of an optical waveguide fiber network. Such a network is built up from very thin, well protected fibers, for example made of glass, which are very well capable of transporting electromagnetic radiation of preferably the infrared type with a wavelength of 800 -1600 nm, denoted light hereinafter. The fibers are well-conducting, i.e. the light rays propagated through them, and accordingly the signals, denoted optical signals hereinafter, carried by these rays are subject to hardly any damping at all. The result is that it is possible to bridge great distances with such fibers without the use of amplifier stations. An optical waveguide fiber network is highly suitable for the transport at high speed of large amounts of information over great distances.

Until now optical waveguide fibers have been used mainly for transport between central stations and distribution stations in which the optical signals are converted into electrical signals which are transported to user locations, for example through copper wires. Such a location is, for example, a consumer's residence or an office. If the capacity of an optical waveguide fiber network is to be optimally utilized, the fibers should run on into such a location and a device is to be provided there for receiving the fiber cable, through which a variety of services is offered. Inside this device, electrical signals are to be derived from the optical signals entering through the fibers, which electrical signals are suitable for individual appliances that are to be connected to the fiber network. Such a device is also denoted an FttH (Fiber to the Home) termination, where "Home" may also represent an office or some other building or location. Said services may be, for example, a telephone connection, a TV and/or radio connection, or a data exchange facility such as an Internet connection.

Such a device should be suitable for users having different wishes, i.e. a user should him/herself be capable of deciding which of the offered services are to be used. The device should accordingly be easy to adapt to a user's wishes. Furthermore, the device should have a good security, such that a user can only have access to services for which he/she is authorized. The device should also be small and light in weight and easy to install in various locations.

It is an object of the present invention to provide a device as defined in the appended claims. In the assembled state, the device is closed unit provided with a first and a second compartment, which compartments have a common base plate and are situated next to one another, in that the first compartment is designed for receiving a fiber cable and for storing individual fibers, and in that the second compartment is designed for accommodating the user modules for the appliances to be connected and comprises a separate appliance connector for each user module.

This device takes the form of a box that can be readily opened and closed and that comprises a bottom or base plate that serves as a mounting plate. Since the device is built up from two mutually adjoining compartments, its height can remain limited. Said compartments are accessible independently of one another, which is very useful when connections are to be changed. User modules may be added or removed by authorized personnel in the second compartment, depending on whether the user does or does not want to make use of certain services, so that the device can be readily adapted and is accordingly flexible as to its applications. The first compartment may serve to store loops of individual fibers, so that a sufficient length of spare fiber is available. The individual fibers each terminate in a fiber connector element which in its turn is connected to or forms part of the relevant user module, i.e. the fibers continue right into said modules. The high information transport capacity of the fibers is optimally utilized in this manner.

US-A 6,078,661 describes a device for connecting user appliances to a communication network, which device can accommodate a number of user modules for individual appliances. Said modules are mounted on a common base plate and are closed off by means of a common cover. The appliances are connected to the network by means of a printed circuit board (PCB) or a lead frame module in this device. US-A 6,078,661 merely notes that the network may be a fiber network and the device an FttH station. A separate fiber compartment is not described or even mentioned, neither is it disclosed how the fibers are arranged with respect to the user modules.

US-A 5,434,944 describes a device for receiving an optical waveguide fiber cable and for separating and storing individual fibers that were divested of a second and first cladding, which fibers are coupled to an optical installation. This device was designed for storing a spare length of fiber such that mounted connections can be dismounted and mounted again while avoiding the risk of unacceptable, sharper bends arising in the fibers. US-A 5,434,944 shows three modules stacked on top of one another, of which the bottom two each comprise two sub-modules, and describes in detail the mechanical elements by means of which the fibers are fixed in the respective modules. This document accordingly merely describes a device that could be regarded as an alternative to the fiber compartment of the device according to the present invention and does not show a compartment for user modules, let alone how such a compartment should be positioned with respect to the fiber compartment.

It is to be noted that another optical network unit is known from US 5,828,807 that has been published on October 27, 1998. The compartments for the modules and the fiber are not separated from each other by means of a partitioning wall. Moreover, the fiber loops plane in the fiber compartment does not run not parallel to the bottom plane of the unit but perpendicular to the latter plane.

It is further noted that a module for an optical communication system is known from US 6,344,911 that has been published on February 5, 2002. This module is to be used in the central station of the optical communication system or on the road between the central station and an end-user of such a system. The module comprises a single compartment without fiber loops.

Finally it is to be noted that a module for an optical communication system is known from US 5,668,911 that has been published on September 16, 1997. Also this module is to be used in the central station of the optical communication system or on the road between the central station and an end-user of such a system. The module comprises a compartment in which a fiber with loops is accommodated. A power unit and a PCB (= Printed Circuit Board) are viewed in projection positioned below and above the fiber with the loops.

A device according to the invention is furthermore characterized in that the second compartment is designed such that user modules can be placed therein and removed therefrom independently of one another.

A minimum number of actions is then necessary for the placement or removal of a module within a short period of time. The second compartment may be provided with positioning and fixation elements that correspond to counter-elements of user modules. The use of such elements renders it easy to position the user modules correctly in a simple manner.

For a good protection of the fibers provided in the device, the latter is furthermore characterized in that it is provided with a first cover for covering at least the first compartment and with a second cover for covering the second compartment.

The first cover may be readily fastened to the base plate, for example in that it is snapped home thereon and/or secured with a screw.

The second cover may comprise a side provided with fiber passage openings that separates the second compartment from the first compartment. The base plate may be provided with raised supports into which this side can be introduced.

An embodiment of this device is characterized in that the first cover also covers the second compartment.

The first cover may constitute the only covering of the second compartment in this case. It is alternatively possible to cover the second compartment with the second cover and to place the first cover over the latter.

If a first and a second cover are used for exclusively covering the first and the second compartment, respectively, the mutually facing sides of these covers may be shaped such that the first cover fixes the second cover in place in the mounted state.

The device is preferably further characterized in that the first cover is provided with a security seal.

This seal may be formed, for example, by a plate that covers a bolt with which the cover is screwed to the base plate and that is secured by means of, for example, a leaden seal. The screw may alternatively be covered with a sticker made from a material, for example paper, that is torn upon removal. The application of a seal renders it possible to check whether the box of the device has been opened by an unauthorized person.

To achieve a stable and reliable fastening of the fiber cable in the device, said device is furthermore characterized in that the first compartment comprises a partitioning wall that is preferably fastened so as to be removable and that is provided with means for securing the fiber cable.

Said means may comprise a gland nut provided at the area of an opening in the partitioning wall, in which the end of the fiber cable is fixed. The partitioning wall may be detachably fastened in raised supports on the base plate and as a result it can be readily adapted, in combination with the fastening means, to the type of fiber cable. The partitioning wall separates the portion of the first compartment in which the fibers are present from the portion where the cable is introduced. Since this latter portion is also closed off by the first cover, the end of the fiber cable is also protected and inaccessible to unauthorized persons.

The device may furthermore be characterized in that it is provided with at least one opening through which at least one fiber split off in the first compartment can be passed on to outside the device.

As a result the device is suitable for use as a distribution station in which signals received from the fiber network are passed on not only to appliances coupled to the station under discussion, but also to a receiver station situated elsewhere or to individual user appliances situated elsewhere. The opening for exiting the split-off fiber may be in the first cover, for example in that side of the cover through which the fiber cable is introduced. It is alternatively possible to conduct such a split-off fiber from the device through an opening in the base plate at the area of the second compartment.

As regards the electrical supply of the user modules, the device is characterized in that the second compartment is provided with a supply connector for connecting an electrical supply cable for supplying all user modules present in this compartment, and in that at least one of said modules is directly connected to this connector.

The other modules can be fed through the latter module, i.e. the supply is connected through. It is alternatively possible to connect all modules directly to the supply connector. The term "supply connector" is to be given a wide interpretation such that it covers not only the connector to the external supply cable, but also any distributor element that may be present and to which the individual user modules can be connected.

An embodiment of the device that is characterized in that the second compartment is provided with at least one opening for passing to the exterior at least one output supply cable connected to the supply connector offers the possibility of using the device at the same time as an electrical distributor box for supplying at least one other device or an appliance present in the vicinity of the device under discussion.

This possibility can be used to great advantage if the device according to the invention is to be accommodated along with other devices in a location, for example the meter box of a residential house, in which there is insufficient space for the provision of a separate wall contact socket for each of the devices. An example of such a different device is a so-termed Internet hub, which comprises an input port and a number of output ports, for example three, and by means of which an Internet signal can be supplied to appliances of the same type, for example computers, which are present in different locations in the house, or to appliances of different types, for example a computer and an electronic game console.

The device is highly suitable for realizing a further inventive idea, in which case it is characterized in that a signal conductor is provided between a first user module and at least one second user module so as to control said second user module by means of a control signal coming in through the first user module.

The further inventive idea is: a user appliance that receives exclusively a general signal, such as a TV signal, and that cannot be controlled from a control center, for example be switched off if the subscription money has not been duly paid, can nevertheless be made controllable. To achieve this, the provider of the signals can send a control signal via a fiber connected to the first user module, for example a module for data transmission, and send a control signal via said signal conductor between said user module and the second user module by means of which the second user module can be switched off, so that it can no longer send a signal to the appliance.

Said control signal is, for example, a signal that cuts off the electrical supply to the second user module, or any other signal that prevents this module from sending an information signal, such as a TV signal, to the associated user appliance.

Since the user modules are located close together in the present device, this device is eminently suitable for realizing this further inventive idea. Said inventive idea, however, is not restricted to its use in the present device, but may be used in systems comprising a plurality of user modules which are located at greater distances from one another and which are not accommodated in one housing.

A sufficiently small embodiment of the device may further be characterized in that it is provided with a plug-in connector at the area of the second compartment for connection to a public mains.

The device can then be directly plugged into a wall socket, and no electrical supply cable is necessary. This embodiment is suitable for use in houses that have no meter box and in which the fiber cable connection is situated, for example, in the living room. It is also possible for the main fiber (bundle) to enter the device straight from a wall. A wall of the device may be provided with a knock-out port for this purpose, if so desired.

These and other aspects of the invention will become clear from and will be elucidated with reference to the embodiments that are to be described by way of example below, also with reference to the accompanying drawings in which:
Fig. 1 comprises a plan view and two side elevations of an embodiment of the device in the closed state,
Fig. 2 comprises two side elevations of parts of a box of this device during assembly,
Fig. 3 shows the base plate of this device in perspective view,
Fig. 4 shows an embodiment of the device in which fibers have been provided and which is connected to appliances,
Fig. 5 is a side view of user modules with the supply connected through,
Fig. 6 shows an electrical supply connector and distributor that may be used in the device,
Fig. 7 is a rear elevation of an embodiment of the device provided with a power mains plug, and
Fig. 8 shows a number of user modules interconnected by signal conductors for use in the device.

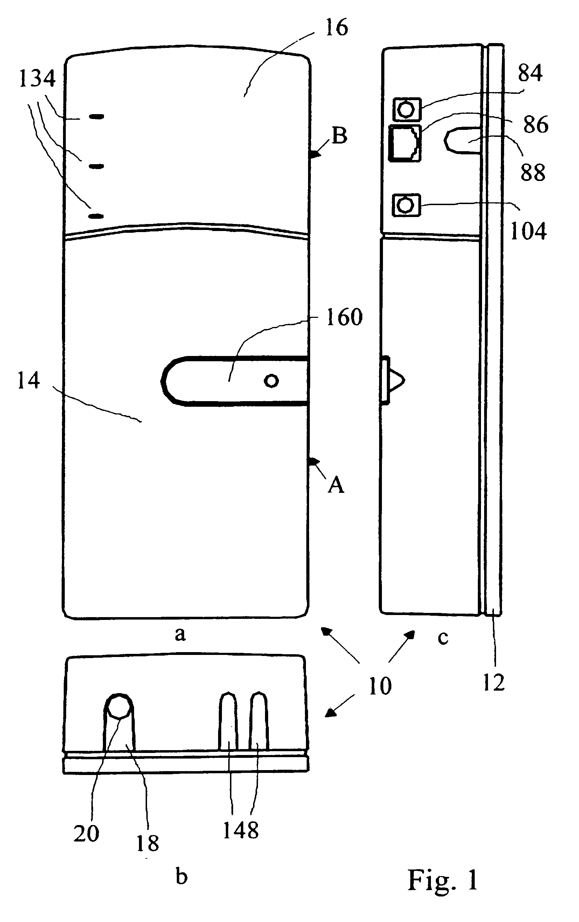

Fig. 1 shows an embodiment of the device 10 in a plan view a and in two side elevations b, c. This device comprises a box whose bottom is formed by a bottom or base plate 12, while its upper side and the side walls are formed by covers 14 and 16, i.e. two covers in this specific embodiment. Below these covers there are a first and a second compartment, which compartments are denoted A and B, respectively. A hole 18 is present in the cover 14 for the introduction of a cable 20 which comprises a number of optical waveguide fibers.

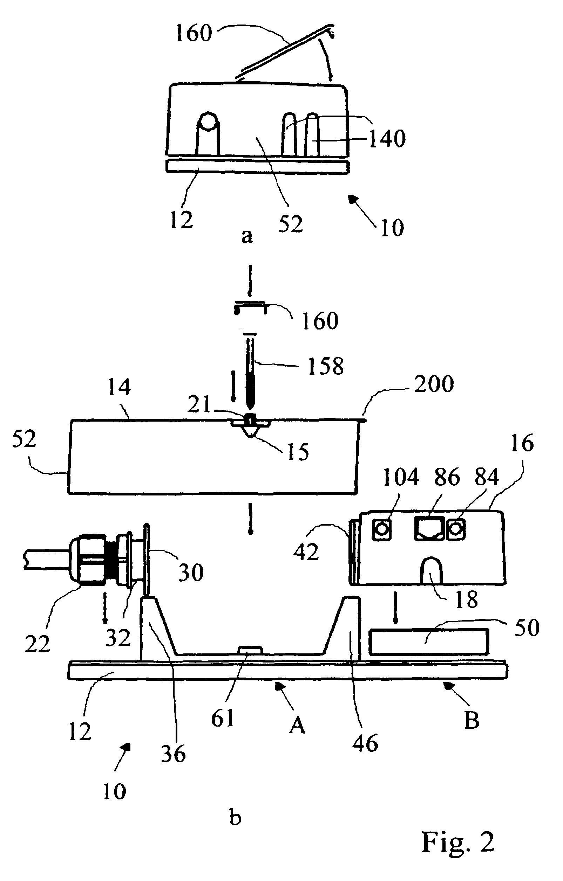

Fig. 2 shows the various parts of the box during assembly in two side elevations a and b. The Figure again shows the two covers 14 and 16 and the base plate 12, as well as said compartments A and B. A number of user modules, of which one having reference numeral 50 is shown in Fig. 2, can be placed in the compartment B. This module is represented as a flat module in horizontal position by way of example here. A second module and possibly further modules are stacked on top of this module.

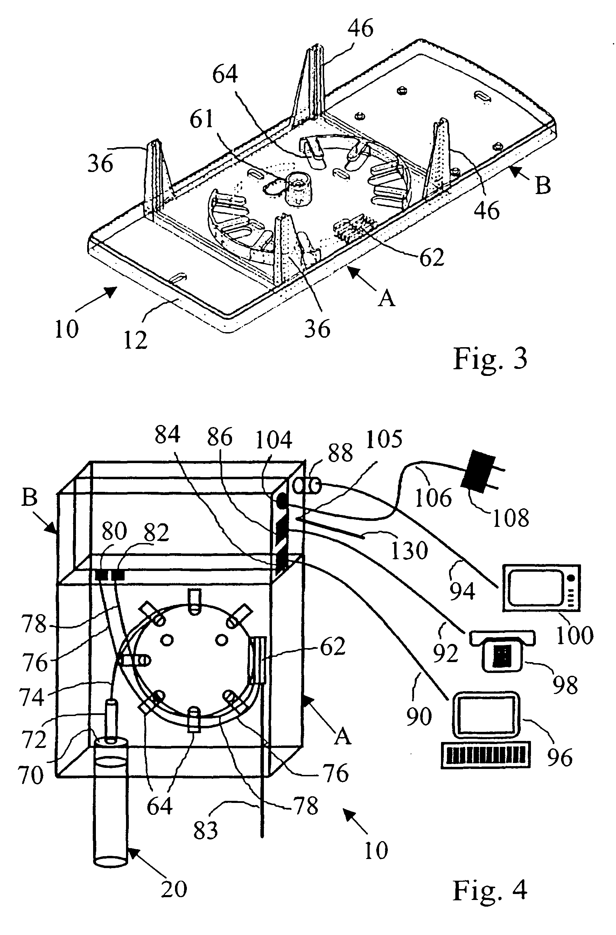

Fig. 3 shows the base plate 12 of the device of Fig. 1 in perspective view. A quantity of fiber, i.e. a certain length of fiber material, can be accommodated in compartment A. These fibers are fed in by the fiber cable 20 which is introduced into the compartment A. In this embodiment (see Fig. 2), the box comprises a partitioning wall 30 with a recess, at the area of which a mounting element is provided, for example a threaded element 32. The end of the cable can be mounted to this element, for example by means of a nut 22. The combination of the elements 32 and 22 is also denoted a gland nut. The base plate 12 is provided adjacent its outer side with two raised holders 36 for the partitioning wall 30, which holders are provided with vertical slots for accommodating the sides of the partitioning wall. The partitioning wall can be slid into the holders from the upper side. The partitioning wall can thus be readily inserted and removed or, if necessary, replaced with another partitioning wall. The latter case may arise when a fiber cable having, for example, a different connector or a different diameter is to be used.

The provision of the partitioning wall 30 creates as it were an individual sub-compartment for the cable entry within the compartment A above the base plate 12, which sub-compartment is separated from the rest of the device. Since this sub-compartment is also closed off by the cover 14, the connection of the fiber cable to the device is well protected. If the device is used as a fiber distributor box, as was noted above and will be described in more detail below, this construction also satisfactorily protects the ends of the exit fibers.

After the fiber cable has been introduced, the desired fibers have been split off, the desired fiber connections have been created, and the desired user modules have been placed, the box must be well closed off so that all fibers and user modules are securely stored. The elements with which this is achieved are also shown in Figs. 2 and 3. Two raised holders 46 are fastened to the base plate 12 and are provided with vertical slots in a similar manner as the holders 36. A side wall 42 of the cover 16 for closing off the compartment B is provided with vertical tags such that they fit in the slots of the holders 46. The compartment B is closed in that the cover 16 is moved to above this compartment, so that the tags are located above the slots. The cover is then moved down and the tags move into the slots until they can go no further. The base plate may be provided with an additional slot between the raised supports 46, into which slot the lower end of that side wall 42 of the cover that is provided with the tags can be passed. Furthermore, the base plate 12 may be provided over its entire circumference with a raised rim onto which the lower ends of the other side walls of the cover 16 can be snapped home.

The compartment A is closed in that the cover 14 is placed over it and is secured to it, for example by means of a screw 158. This screw is put in via an opening in the cover 14 and mates with a raised cylindrical element 61 of the base plate 12. The opening in the cover 14 is present under the metal plate 160 shown in Figs. 1 and 2, which plate forms part of a security seal of the cover 14. The device may thus be readily protected against, for example, an unauthorized modification of the user functions. The cover 14 may be provided with a recessed portion 15 in which an opening is present. A bolt 158 can be provided in this opening so as to fit in the raised cylinder 61 of the base plate 12. The cover 14 is securely fastened to the base plate in that this bolt is tightened. A thin plate 160 provided with a small tag fitting into a recess of the cover 12 may be used to seal this fastening. This cover is further provided with a small pin 21 in which an eyelet is present. This pin fits in an opening in the plate 160. The fastening of the cover 14 to the base plate 12 is security-sealed in that the small tag of the plate is pushed into the recess of the cover and the plate is pressed down such that the opening is passed over the pin 21, whereupon, for example, a leaden seal is provided in the pin's eyelet.

If the base plate 12 is provided with the raised rim mentioned above, the lower ends of the two long sides and of the short side 52 of the cover 14 will be snapped home over this rim when the compartment A is closed.

The side of the cover 14 facing towards the cover 16 may be open, and the cover 16 may be provided at this area with a recess into which a projecting portion 200 of the end of the cover 14 fits. The cover 16 is then additionally locked upon a fastening of the cover 14. The partitioning wall 30 is also locked thereby, so that the cable is securely anchored.

Instead of two separate covers 14 and 16 for the respective compartments A and B, cover 14 may be a longer cover that covers both the compartment A and the compartment B. This longer cover will then have four closed side walls. The longer cover will be combined with a separate cover 96 for the compartment B.

The base plate 12 further comprises elements for retaining fibers accommodated in the compartment A, considerably simplifying a fitter's work. These elements consist of a holder 62 for fixing the joints that connect the incoming fibers to fibers forming part of the user modules, and a number of tags 64 under which the coiled-up portions of the fibers can be stored. The connecting joints, for example known fusion joints, also denoted splices, are introduced into the holder, for example, and clamped therein. There is an empty space underneath the holder 62, as there is underneath the tags 64, which extends up to the wall. A partial fiber - preferably coiled up into one or more loops - of each fiber fastened in the holder 62 extends from this holder to the user modules, and another partial fiber - again preferably coiled up into one or more loops - extends to the input fiber (bundle) 20. The loops of the partial fibers provide the major advantage that the positional tolerance for fastening the partial fibers to one another is great. Preferably, the number of loops is considerably greater than one, for example 5 or more, or even 10 or more. In this manner "unsuccessful" splices can be readily repaired, and there is also a stock of spare (partial) fibers available in a suitable orientation if subsequently a new splice is to be made for some reason, or a splice is to be replaced. They are well secured, stored and protected by the position of the loops against the wall and below the tags 64 and the holder 62.

The base plate and the raised holders 36, 46, the tags, and the holder 62 may be manufactured as a single element, for example from a synthetic resin, in an injection molding process. As was noted above, the base plate serves as a mounting plate, i.e. the device can be mounted to a surface, for example screwed to a wall, with the use of this plate.

Fig. 4 is a diagrammatic elevation of the opened box, showing the principle of the device 10 and further details thereof. The fiber input cable 20 has a protective sheath 70. The portion of the cable to be accommodated in the device is divested of its sheath such that, for example, only a small portion of this sheath enters the compartment A. Beyond this sheath portion, the bundle of fibers is surrounded, for example, only by a secondary cladding 72 which is also removed, except for a small length, so that each fiber is only provided with a primary sheath. The fiber 74 is connected to a secondary fiber, for example by means of a fusion joint. Fig. 4 shows two secondary fibers 76 and 78 by way of example. Each of these fibers terminates in a fiber connector 80, 82, for example a piercing connector such as an SC/(A)PC connector or a screw connector such as an FC/(A)PC connector that fits into a mating receptor of a user module. The connectors and receptors do not form part of the present invention and need not be discussed here. It suffices to note that the type of connector and receptor used for a user module depends on the application, i.e. the function of the respective module. Fig. 4 shows the connectors 80 and 82 as lying in one plane for simplicity's sake. In practice, the position of a connector is determined by the shape and position of the relevant user module and the position of the receptor in this module.

As was noted above, the fibers are laid in loops such that the curves followed by the fibers are sufficiently wide in all locations, preventing radiation losses, and thus signal losses. Since the fibers are very thin, each individual fiber can be laid in a number of loops within the space of compartment A. A sufficient length of spare fiber is accordingly available if connections are to be restored or new connections, i.e. new splices, are to be made. The fibers are thin and springy and accordingly difficult to handle, so provisions are made for fixing fibers already present in the compartment A, so that they cannot interfere with further mounting activities. These provisions may consist of a number of tags 64 underneath which the fibers can be accommodated so as to be fixed in place and the splice holder 62 in which the splices can be held and under which the loops can be accommodated. It is possible to use movable tags instead of the fixed tags 64; the former can be hinged upwards and, after the fibers have been positioned, moved down again. The splice holder 62 may also be movable instead of fixed.

Since the compartment A has to have a minimum length and width for allowing the loops provided therein sufficiently wide bends on the one hand, while on the other hand the volume of the accommodated fibers is small, the device still contains comparatively much free space. This is not only convenient for service personnel, it also offers a possibility of mounting other components used for optical waveguide communication in the compartment. Examples of this are a wavelength splitter, for example in the form of a diffraction element such as a raster, which separates signals transported through a fiber by means of light of different wavelengths from one another, and an element that merges together light of different wavelengths.

The user modules are modules whose function and contents are determined by the appliance to which they are to be coupled and the signal or signals they are to supply to the relevant appliance. These modules preferably have metal walls so that their operation is not interfered with by any electromagnetic fields that may be present. The modules are provided with user connectors 84, 86, and 88 that are known per se, by means of which they can be connected to the associated appliances 96, 98, and 100 via signal wires or cables 90, 92, and 94 so as to pass on their signals to these appliances. The type of user connector is dependent on the type of user module. In the embodiment shown in Fig. 4, where the compartment B contains user modules for a TV set 100, a telephone 98, and a computer 96, the connector 88 for TV signal transfer is a coaxial plug, the connector 86 for telephone signal transfer, for example, an RJ11 connector, and the connector 84 for data transfer, for example, a UTP or an IDSN connector. The connections between the appliances and the user modules, and accordingly those between the appliances and the fiber network, through the device may be single-direction (passive) or two-direction (active) links. The latter are required for a computer or an interactive TV set, for example. A so-termed bidirectional transceiver may be used for achieving an interactive link.

The lower part of Fig. 4 suggests the use of the device for connecting two user appliances 76 and 78, i.e. there are two secondary fibers in the compartment A. The upper part of Fig. 4, however, shows that three user appliances can be connected and thus suggests that the compartment B contains three user modules. This presentation is designed to indicate the flexibility of the device. The device may comprise not only the user modules necessary as shown, but also optional user modules that can be connected to the fiber network by an authorized body whenever a user needs them. Alternatively and indeed preferably, the compartment A contains all secondary fibers that may conceivably be required, whereas the compartment B contains only those modules the user requires at the relevant moment, so that modules may be added later as required.

In the embodiment of Fig. 4, the connectors 84, 86, and 88 are placed on top of the other when viewed in the perpendicular direction of the base plate. The modules are placed one on top of the other, i.e. in a vertical row. The compartment B is arranged such that modules can be introduced horizontally, so that it is possible to place modules independently of one another. The compartment B preferably comprises means for fixing the modules in place, for example wide grooves into which the sides of the modules fit or narrow grooves or internal projections of a different shape for receiving mating counter elements on the side walls of the modules. The positions of the fixation means are determined by the orientation of the modules in the compartment and the shape and dimensions of the modules.

Although the length of the device is increased somewhat by the placement of the user modules next to the fiber compartment A instead of, for example, above it, this length remains very acceptable in practice. A first embodiment of the device has a length of 22 cm and a width of 10 cm. It is to be expected that these dimensions can be reduced. The minimum dimensions will be dependent on the required minimum radii of curvature of the fiber loops in the compartment A and the dimensions of the user modules. A major advantage of the device is that its height can be limited to, for example, 5 cm. It is possible to obtain a sufficient amount of free space in vertical direction, also with a limited height of the compartment B, for enabling the fibers to enter and leave the user modules in a direction perpendicular to the base plate.

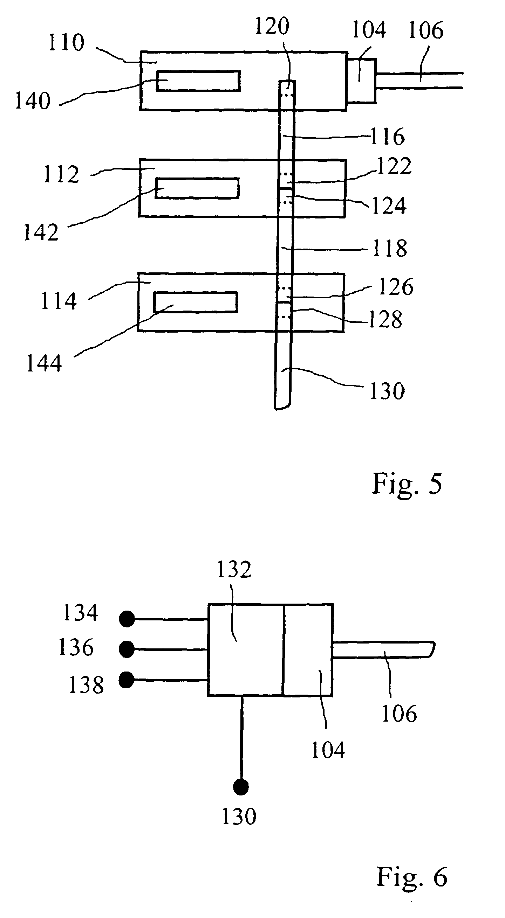

The compartment B comprises a supply connector 104 to which an electrical supply cable 106 provided with a usual mains plug 108 can be connected for supplying the user modules with power. The power supply may be split up within the compartment B into a number of branches sufficient for supplying all user modules present as well as any modules that may be added later. It may be convenient under certain conditions to couple the supply cable to one user module, for example the first one in the series, and to connect the supply through from there to the other modules, as is diagrammatically depicted in Fig. 5.

Fig. 5 is a side view of three user modules 110, 112 and 114 placed on top of one another. As is diagrammatically depicted, the supply connector 104 is provided on the module 110, this module being directly supplied via the cable 106. The module 112 is supplied from the module 110 via a cable 116 that issues from the module 110 via an opening 120 and enters the module 112 via an opening 122. The module 114 is supplied from the module 112 via a cable 118 that issues from the module 112 via an opening 124 and enters the module 114 via an opening 126.

If the device is used as a supply distributor box and accordingly, as shown in Fig. 4, a supply cable 130 is passed to the exterior through an opening 105 from the compartment B for supplying an external device or appliance, the external supply cable 130 may be connected to the supply inside the module 114 through an opening in this module, as is shown in Fig. 5. The external supply cable may alternatively be connected to the supply connector. This is also the case if no through connection of the supply is used, as is shown in Fig. 6.

Fig. 6 shows the supply cable 106 and the supply connector 104 as well as a diagrammatically depicted distributor device 132 that is connected to or forms part of the connector. A number of cables, for example four, are connected to the device, three of which, the cables 134, 136, and 138, are designed for supplying three user modules, while the cable 130 is the external supply cable.

As Fig. 5 shows, the user modules may be provided with fixation elements 140, 142, and 144 by means of which the modules can be fixed in place in the base plate 12 of the device. The fixation elements may be raised or recessed elements and have a rectangular or rounded shape. Said fixation elements fit into mating recessed or raised elements in the base plate 12. The user modules are correctly positioned and retained in that the fixation elements are inserted into the corresponding elements of the base plate.

The fiber cable may comprise further fibers in addition to the fibers that connected to secondary fibers in the device, such as the fibers 76 and 78 in Fig. 4, and used for user modules present or yet to be placed. One or several of said further fibers may be connected to or fused to a further secondary fiber 83 that issues from the device and that may be denoted an external fiber. The splice of the external fiber may again be fixed in place by the splice holder 62 in that the splice is accommodated underneath said holder. The external fiber or fibers may be conducted from the device via the openings 148 in the cover 14 shown in Figs. 1 and 2 and through corresponding openings in the partitioning wall 30, if present. The partitioning wall 30 may also be provided with fiber couplers that serve as lead-through members. The external fiber or fibers may be conducted to a different location in the same building, for example to the top floor of a residential house, so that further appliances can be connected also in this location to the fiber cable that enters the device. The device can thus be used as a fiber distributor box.

An external fiber may also be conducted to outside the device in locations other than an opening 140 in the cover 14, for example via an opening in one of the long sides of the cover 14 or via an opening in the base plate 12. Neither does the fiber input cable 20 have to be introduced into the device in the manner shown in the Figures, but may, for example, be alternatively introduced through the base plate 12. The latter may be favorable if the fiber input cable enters the house or a building through the wall of a room.

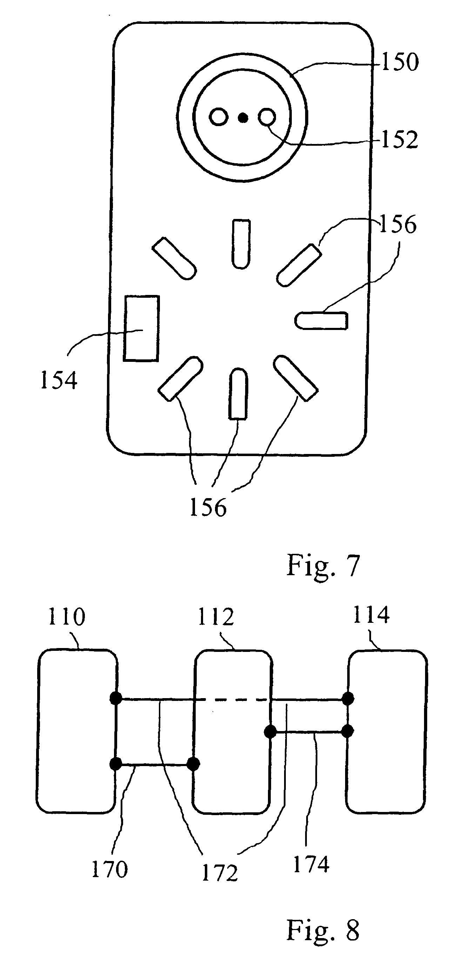

If the device is sufficiently small, it can be provided with a mains plug connector at the area of the compartment B, so that it can be placed on a wall socket and the user modules are directly supplied thereby without the intervention of a supply cable. Fig. 7 is a rear elevation of an embodiment of the device whose base plate 12 is provided with a plug 150 with contact pins 152. This Figure also shows the positions of the splice holder 62 mentioned above and the fiber fixation tags 64 of Figs. 3 and 4 in the form of openings 156 in the base plate 12. These openings are the result of the process used for shaping the base plate: the fixation tags and the splice holder may, for example, be stamped from the plate, or the plate with all its elements may be formed in an injection molding process. It is no disadvantage that the fibers are not covered in the compartment A at the areas of the openings 154 and 156, because the base plate will be mounted against a surface, whereby the fibers are protected after all.

As Figs. 1 and 2 show, the cover 16 of the compartment B may be provided with small openings 134, three of which are shown by way of example. The number of openings corresponds to the number of user modules that can be accommodated in the compartment B. An indicator element, such as a light-emitting diode (LED), may be placed in such an opening and coupled to a user module, lighting up when the respective module is active. It can thus be externally observed whether a certain user module is functioning.

Instead of the slide/snap connection described above, the fastening of the cover 14 to the base plate 12 may alternatively be sealed in that, after the bolt 158 has been screwed home into the cylinder 61, an adhesive seal or sticker is applied over this bolt which can only be removed by tearing it off, so that it cannot be applied again. Breaking of the seal of the device renders it apparent that an unauthorized person has gained access to the device, whereupon an authorized body can take the necessary measures. The seal 160 or some other security seal at the same time seals the compartment B for the user modules, because the cover 16 is fixed in place by the cover 14 in the assembled state.

According to a further inventive idea, signal conductors, for example signal wires, may be provided between user modules in the compartment B. A signal, for example a control signal entering a first user module, can be passed on to a second user module via such a signal conductor. This facility may be used to advantage if the second user module is constructed for receiving a general signal, such as a TV signal, and cannot be individually contacted from a central station. The signal provider may then send a (control) signal destined for a not individually addressable (second) user module along with the former signal, for example a data signal for a computer, that is destined for an individually addressable (first) user module. In this module the control signal is separated from the data signal and sent to the second user module via the signal conductor. This control signal may now be used, for example, for cutting off the power supply to the second module so that this module is no longer active and cannot deliver a signal to the appliance coupled to the second user module. The signal provider is thus able to cut off, for example, TV reception at a customer's, for example if the latter has failed to pay the subscription money. Numerous further applications are conceivable for user modules with through wiring.

Two or more user modules may be connected through in the device under discussion. Fig. 8 diagrammatically shows an embodiment with three user modules 110, 112, and 114 placed one on top of the other in the lateral direction of the device, wherein a first signal conductor 170 is provided between the modules 110 and 112 and a second signal conductor 172 between the modules 110 and 114. A third signal conductor 174 may optionally be provided between the modules 112 and 114. The number of through connections will depend in practice on the number of modules, the functions of these modules, and the desired controllability thereof.

Since the user modules are placed close together in the compartment B, this device is highly suitable for realizing said through connections. The idea of realizing these through connections, however, may also be put into practice outside the present device, and in general in (fiber) communication systems comprising a plurality of user modules.

## Claims

1. A device (1) comprising an optical network unit to be used at the premises of an end-user for connecting appliances (96, 98, 100) to optical waveguide fibers (74), in which device signals received from the optical waveguide fibers (74) are converted into signals suitable for the relevant appliances by means of user modules (50; 110, 112, 114), wherein in the assembled state, the device is a closed unit (10) provided with a first (A) and a second compartment (B), which compartments (A,B) have a common base plate (12), are viewed in projection situated next to one another, and in that the first compartment (A) is designed for receiving a fiber cable (20) comprising the optical waveguide fibers (74) and for storing individual optical waveguide fibers (74) in one or more loops in a plane substantially parallel to the common base plate (12), and in that the second compartment (B) is designed for accommodating the user modules (50, 110, 112, 114) for the appliances to be connected and comprises a separate appliance connector (84, 86, 88) for each user module (50, 110, 112, 114) in a wall of the unit (10); **characterized in that** the user modules (50;110,112,114) are to be placed one on top of the other viewed in a direction perpendicular to the common base plate (12), the second compartment (B) is designed such that the user modules (50; 110, 112, 114) can be placed therein and removed therefrom independently of one another and the device (1) is provided with a first cover (14) for covering at least the first compartment (A) and with a second cover (16) for covering the second compartment (B), wherein a side wall (42) of the second cover (16) closes off the second compartment (B) against the first compartment (A) and allows the optical waveguide fibers (74) to be connected to the user modules (50;110, 112,114)

2. A device as claimed in claim 1, **characterized in that** the second compartment (B) is designed such that user modules (50; 110, 112, 114) can be placed therein and removed therefrom in a direction parallel to the common base plate (12).

3. A device as claimed in claim 1 or 2, **characterized in that** the first cover (14) also covers the second compartment (B).

4. A device as claimed in claim 1, 2, or 3, **characterized in that** the first cover (14) is provided with a security seal (160) which functions to signal whether the unit (10) has been opened by an unauthorized person.

5. A device as claimed in any one of the preceding claims, **characterized in that** the first compartment (A) comprises a further partitioning wall (30) that separates two sub-compartments of the first compartment (A) from each other, is preferably fastened so as to be removable and that is provided with means (32) for securing the fiber cable (20).

6. A device as claimed in any one of the preceding claims, **characterized in that** it is provided with at least one opening (140) through which at least one fiber (83) split off in the first compartment (A) can be passed on to outside the device.

7. A device as claimed in any one of the preceding claims, **characterized in that** the second compartment (B) is provided with a supply connector (104) for connecting an electrical supply cable (106) for supplying all user modules (110, 112, 114) present in this compartment, and **in that** at least one of said modules (100, 112, 114) is directly connected to said supply connector (104).

8. A device as claimed in claim 7, **characterized in that** the second compartment (B) is provided with at least one opening (105) for passing to the exterior at least one output supply cable (130) that is connected to the supply connector (104) for the purpose of supplying another device.

9. A device as claimed in any one of the preceding claims, **characterized in that** a signal conductor (170, 172, 174) is provided between a first user module (110) and at least one second user module (112, 114) so as to control said second user module (112, 114) by means of a control signal coming in through the first user module (110).

10. A device as claimed in any one of the preceding claims, **characterized in that** it is provided with a plug-in connector (150) at the area of the second compartment (B) for connection to a public mains.

## Patentansprüche

1. Vorrichtung (1) mit einer optischen Netzwerkeinheit, zu verwenden in den Räumen eines Endverbrauchers zur Verbindung von Geräten (96, 98, 100) mit optischen Wellenleiterfasern (74), wobei in dieser Vorrichtung Signale, empfangen von den optischen Wellenleiterfasern (74) in Signale umgewandelt werden, die für die betreffenden Geräte geeignet sind, und zwar mit Hilfe von Benutzermodulen (50; 110, 112, 114), wobei in dem zusammengebauten Zustand die Vorrichtung eine geschlossene Einheit (10) ist, versehen mit einem ersten (A) und einem zweiten Fach (B), wobei diese Fächer (A, B) eine gemeinsame Basisplatte (12) haben, gesehen in Projektion nebeneinander, und wobei das erste Fach (A) vorgesehen ist zum Empfangen eines Faserkabels (20) mit den optischen Wellenleiterfasern (74) und zum Unterbringen einzelner optischer Wellenleiterfasern (74) in einer oder mehreren Schleifen in einer Ebene, die sich nahezu parallel zu der gemeinsamen Basisplatte (12) erstreckt, und wobei das zweite Fach (B) dazu vorgesehen ist, die Benutzermodule (50; 110, 112, 114) für die zu verbindenden Geräte unterzubringen und einen einzelnen Gerätestecker (84, 86, 88) für jedes Benutzermodul (50; 110, 112, 114) in einer Wand der Einheit (10) aufweist, **dadurch gekennzeichnet, dass** die Benutzermodule (50; 110, 112, 114) gesehen in einer Richtung senkrecht zu der gemeinsamen Basisplatte (12) aufeinander gesetzt werden sollen, wobei das zweite Fach (B) derart vorgesehen ist, dass die Benutzermodule (50; 110, 112, 114) unabhängig voneinander darin untergebracht und daraus entfernt werden können und die Vorrichtung (1) mit einem ersten Deckel (14) versehen ist zum Abdecken wenigstens des ersten Fachs (A) und mit einem zweiten Deckel (16) zum Abdecken des zweiten Fachs (B), wobei eine Seitenwand (42) des zweiten Deckels (16) das zweite Fach (B) gegenüber dem ersten Fach (A) abdeckt und es ermöglicht, dass die optischen Wellenleiterfasern (74) mit den Benutzermodulen (50; 110, 112, 114) verbunden werden.

2. Vorrichtung nach Anspruch 1, **dadurch gekennzeichnet, dass** das zweite Fach (B) derart vorgesehen ist, dass Benutzermodule (50; 110, 112, 114) in einer Richtung parallel zu der gemeinsamen Basisplatte (12) darin untergebracht und daraus entfernt werden können.

3. Vorrichtung nach Anspruch 1 oder 2, **dadurch gekennzeichnet, dass** der erste Deckel (14) auch das zweite Fach (B) abdeckt.

4. Vorrichtung nach Anspruch 1, 2 oder 3, **dadurch gekennzeichnet, dass** der erste Deckel (14) mit einer Sicherheitsabdichtung (160) versehen ist, die derart funktioniert, dass sie signalisiert, ob die Einheit (10) von einer unberechtigten Person geöffnet worden ist.

5. Vorrichtung nach einem der vorstehenden Ansprüche, **dadurch gekennzeichnet, dass** das erste Fach (A) eine weitere aufteilende Wand (30) aufweist, die zwei Teilfächer des ersten Fachs (A) voneinander trennt, und die vorzugsweise derart befestigt ist, dass diese entfernbar und mit Mitteln (32) zum Befestigen des Faserkabels (20) versehen ist.

6. Vorrichtung nach einem der vorstehenden Ansprüche, **dadurch gekennzeichnet, dass** diese mit wenigstens einer Öffnung (140) versehen ist, durch die hindurch wenigstens eine in dem ersten Fach (A) abgespaltete Faser (83) zur Außenseite der Vorrichtung geführt werden kann.

7. Vorrichtung nach einem der vorstehenden Ansprüche, **dadurch gekennzeichnet, dass** das zweite Fach (B) mit einem Speisestecker (104) versehen ist zum Verbinden eines elektrischen Speisekabels (106) zum Speisen aller Benutzermodule (110, 112, 114), die sich in diesem Fach befinden, und dass wenigstens eines der Module (110, 112, 114) unmittelbar mit dem genannten Speisestecker (104) verbundne ist.

8. Vorrichtung nach Anspruch 7, **dadurch gekennzeichnet, dass** das zweite Fach (B) mit wenigstens einer Öffnung (105) versehen ist zum Hinausführen wenigstens eines Ausgangsspeisekabels (130), das zum Speisen einer anderen Vorrichtung mit dem Speisestecker (104) verbunden ist.

9. Vorrichtung nach einem der vorstehenden Ansprüche, **dadurch gekennzeichnet, dass** ein Signalleiter (170, 172, 174) zwischen dem ersten Benutzermodul (110) und wenigstens einem zweiten Benutzermodul (112, 114) vorgesehen ist, und zwar zur Steuerung des genannten zweiten Benutzermoduls (112, 114) mit Hilfe eines Steuersignals, das über das erste Benutzermodul (110) eintrifft.

10. Vorrichtung nach einem der vorstehenden Ansprüche, **dadurch gekennzeichnet, dass** diese mit einem Einsteckanschluss (150) in dem Bereich des zweiten Faches (B) versehen ist, und zwar zur Verbindung mit einem öffentlichen Versorgungsnetz.

## Revendications

1. Dispositif (1) comprenant une unité de réseau optique à utiliser dans les locaux d'un utilisateur final pour connecter des appareils (96, 98, 100) à des fibres optiques de guide d'ondes (74), dans lequel des signaux de dispositif reçus des fibres optiques de guide d'ondes (74) sont convertis en signaux adaptés aux appareils pertinents au moyen de modules d'utilisateur (50; 110, 112, 114), dans lequel, dans l'état assemblé, le dispositif est une unité fermée (10) munie d'un premier compartiment (A) et d'un deuxième compartiment (B), lesdits compartiments (A, B) ont une plaque de base commune (12) et sont vus en projection situés l'un à côté de l'autre, et le premier compartiment (A) est conçu pour recevoir un premier câble (20) comprenant les fibres optiques de guide d'ondes (74) et pour stocker des fibres optiques de guide d'ondes individuelles (74) dans une ou plusieurs boucles dans un plan sensiblement parallèle à la plaque de base commune (12), et le deuxième compartiment (B) est conçu pour recevoir les modules d'utilisateur (50; 110, 112, 114) pour les appareils à connecter et comprend un connecteur d'appareil distinct (84, 86, 88) pour chaque module d'utilisateur (50; 110, 112, 114) dans une paroi de l'unité (10) ; **caractérisé en ce que** les modules d'utilisateur (50; 110, 112, 114) doivent être placés l'un sur l'autre en vue dans une direction perpendiculaire à la plaque de base commune (12), le deuxième compartiment (B) est conçu de sorte que les modules d'utilisateur (50; 110, 112, 114) puissent être placés à l'intérieur de celui-ci et enlevés de celui-ci indépendamment l'un de l'autre et le dispositif (1) est muni d'un premier couvercle (14) pour couvrir au moins le premier compartiment (A) et d'un deuxième couvercle (16) pour couvrir le deuxième compartiment (B), dans lequel une paroi latérale (42) du deuxième couvercle (16) ferme le deuxième compartiment (B) contre le premier compartiment (A) et permet aux fibres optiques de guide d'ondes (74) d'être connectées aux modules d'utilisateur (50; 110, 112, 114).

2. Dispositif selon la revendication 1, **caractérisé en ce que** le deuxième compartiment (B) est conçu de manière à ce que des modules d'utilisateur (50; 110, 112, 114) puissent être placés à l'intérieur de celui-ci et enlevés de celui-ci dans une direction parallèle à la plaque de base commune (12).

3. Dispositif selon la revendication 1 ou 2, **caractérisé en ce que** le premier couvercle (14) couvre également le deuxième compartiment (B).

4. Dispositif selon la revendication 1, 2 ou 3, **caractérisé en ce que** le premier couvercle (14) est muni d'un joint de sécurité (160) qui fonctionne pour signaler si l'unité (10) a été ouverte par une personne non autorisée.

5. Dispositif selon l'une quelconque des revendications précédentes, **caractérisé en ce que** le premier compartiment (A) comprend une autre cloison (30) qui sépare les deux sous-compartiments du premier compartiment (A) l'un de l'autre, qui est de préférence attachée de manière à être amovible et qui est munie de moyens (32) pour fixer le câble de fibre (20).

6. Dispositif selon l'une quelconque des revendications précédentes, **caractérisé en ce qu'**il est muni d'au moins une ouverture (140) à travers laquelle au moins une fibre (83) divisée dans le premier compartiment (A) peut être passée à l'extérieur du dispositif.

7. Dispositif selon l'une quelconque des revendications précédentes, **caractérisé en ce que** le deuxième compartiment (B) est muni d'un connecteur d'alimentation (104) pour connecter un câble d'alimentation électrique (106) pour alimenter tous les modules d'utilisateur (110, 112, 114) présents dans ce compartiment, et **en ce qu'**au moins l'un desdits modules (110, 112, 114) est directement connecté au dit connecteur d'alimentation (104).

8. Dispositif selon la revendication 7, **caractérisé en ce que** le deuxième compartiment (B) est muni d'au moins une ouverture (105) pour faire passer à l'extérieur au moins un câble d'alimentation de sortie (130) qui est connecté au connecteur d'alimentation (104) dans le but d'alimenter un autre dispositif.

9. Dispositif selon l'une quelconque des revendications précédentes, **caractérisé en ce qu'**un conducteur de signal (170, 172, 174) est fourni entre un premier module d'utilisateur (110) et au moins un deuxième module d'utilisateur (112, 114) de manière à commander ledit deuxième module d'utilisateur (112, 114) au moyen d'un signal de commande entrant à travers le premier module d'utilisateur (110).

10. Dispositif selon l'une quelconque des revendications précédentes, **caractérisé en ce qu'**il est muni d'un connecteur de branchement (150) au niveau de la zone du deuxième compartiment (B) pour la connexion au secteur.
